# FASCICULE DE BREVET EUROPEEN

(11) **EP 4 339 484 B1**
(45) Date de publication et mention de la délivrance du brevet: **11.11.2026**
(21) Numéro de dépôt: 23196193.9
(22) Date de dépôt: 08.09.2023
(51) Int. Cl.: F16H 1/28, F16H 57/08

(54) **TURBOMACHINE D'AÉRONEF À RÉDUCTEUR MÉCANIQUE**
FLUGZEUGTURBOMASCHINE MIT MECHANISCHEM UNTERSETZUNGSGETRIEBE
AIRCRAFT TURBINE ENGINE WITH MECHANICAL REDUCTION GEAR

(30) Priorité: 13.09.2022 FR 2209158
(43) Date de publication de la demande: 20.03.2024
(73) Titulaire: Safran Transmission Systems, 92700 Colombes (FR)
(72) Inventeur: MOULY, Guillaume Pierre, 77550 MOISSY-CRAMAYEL (FR); BECK, Guillaume Julien, 77550 MOISSY-CRAMAYEL (FR); PELTIER, Jordane Emile André, 77550 MOISSY-CRAMAYEL (FR); SEREY, Jean-Pierre, 77550 MOISSY-CRAMAYEL (FR); SIMON, Adrien Louis, 77550 MOISSY-CRAMAYEL (FR)
(74) Mandataire: Gevers & Orès

(56) Documents cités:
- DE-B3- 102017 120 336
- US-A1- 2021 310 417
- US-A1- 2021 388 769

## Description

### Domaine technique de l'invention

La présente invention concerne le domaine des réducteurs mécaniques pour des turbomachines en particulier d'aéronef.

### Arrière-plan technique

L'état de l'art comprend notamment les documents WO-A1-2010/092263, FR-A1-2 987 416, FR-A1-3 008 462, FR-A1-3 008 463, US2021/388769 et FR-A1-3 041 054.

Le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différent et sont équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites.

Les réducteurs peuvent être composés d'un ou plusieurs étages d'engrènement. Cet engrènement est assuré de différentes façons comme par contact, par friction ou encore par champs magnétique.

Dans la présente demande, on entend par « étage », une denture qui est configurée pour être engrenée avec une denture complémentaire. Une denture peut être interne ou externe.

Un satellite peut comprendre un ou deux étages d'engrènement. Un satellite à simple étage comprend une denture qui peut être droite, hélicoïdale ou en chevron et dont les dents sont situées sur un même diamètre. Cette denture coopère à la fois avec le solaire et la couronne.

Un satellite à double étage comprend deux dentures qui sont situées sur des diamètres différents. Une première denture coopère avec le solaire et une seconde denture coopère avec la couronne.

Chacune des dentures d'un satellite peut comprendre une seule série de dents ou bien deux séries de dents indépendantes, c'est-à-dire à distance axiale l'une de l'autre. On a déjà proposé un satellite dont la denture d'engrènement avec le solaire comprend deux séries de dents disposées de part et d'autre d'un plan médian du satellite, et dont la denture d'engrènement avec la couronne comprend également deux séries de dents disposées de part et d'autre de ce plan, les deux dentures de chaque satellite ayant des diamètres différents.

Un réducteur à double étage d'engrènement présente l'avantage d'avoir un rapport de réduction plus important qu'un réducteur à simple étage d'engrènement de même encombrement. Cependant, un inconvénient de ce type de réducteur est le moment généré dans les satellites par des écarts d'efforts appliqués sur les étages des satellites.

Le document US-A1-2021/310417 propose de remplacer un satellite unique par une paire de satellites coaxiaux montés têtes bêches à la figure 17. Le document DE-B3-10 2017 120336 décrit un véhicule automobile et non pas une turbomachine.

L'invention propose un perfectionnement permettant d'augmenter encore davantage le rapport de réduction d'un réducteur mécanique de turbomachine d'aéronef tout en limitant les moments générés dans les satellites.

### Résumé de l'invention

L'invention concerne une turbomachine selon la revendication 1.

L'invention concerne donc un réducteur dont les satellites ont la particularité d'avoir une denture (centrale) de petit diamètre qui engrène avec la couronne, et une denture (latérale) de grand diamètre qui engrène avec le solaire. En termes d'encombrement, on comprend que l'utilisation d'un petit diamètre pour l'engrènement avec la couronne permet de réduire le diamètre de la couronne et donc l'encombrement radial du réducteur.

L'invention est notamment compatible
- d'un réducteur à plusieurs étages ;
- d'un réducteur épicycloïdal dans la mesure où la couronne est fixe ;
- de dentures droites ou en chevron.

La turbomachine selon l'invention peut comprendre une ou plusieurs des caractéristiques suivantes, prises isolément les unes des autres, ou en combinaison les unes avec les autres :
- ledit plan médian est un plan médian de symétrie ;
- le solaire comprend une denture formée par deux séries de dents qui sont à distance axiale l'une de l'autre et qui engrènent respectivement avec les deux séries de dents de la première denture de chaque satellite ;
- la couronne comprend une denture formée par deux séries de dents qui sont à distance axiale l'une de l'autre et qui engrènent respectivement avec les deux séries de dents de la seconde denture de chaque satellite ;
- la couronne présente une demi-couronne avant et une demi-couronne arrière, les demi-couronnes étant symétriques et étant disposée présente entre les deux séries de dents de la première denture de chaque satellite ;
- chacun des satellites est formé d'une seule pièce ;
- chacun des satellites est formé par l'assemblage d'au moins trois pièces dont :
   + une pièce tubulaire centrée sur le second axe, cette pièce tubulaire comportant une partie médiane comportant les deux séries de dents de la seconde denture, et
   + deux voiles annulaires qui sont centrés sur le second axe et s'étendent aux deux extrémités axiales opposées de la première pièce, ces voiles annulaires comportant respectivement à leurs périphéries externes les deux séries de dents de la première denture ;
- les voiles annulaires comprennent chacune à leurs périphéries internes un logement non circulaire qui coopère par complémentarité de formes avec au moins une protubérance de l'extrémité correspondante de la pièce tubulaire afin que les voiles annulaires soient solidaires en rotation de la pièce tubulaire ;
- chacun des satellites comprend deux surfaces cylindriques internes qui sont à distance axiale l'une de l'autre et forment respectivement des surfaces de roulement de paliers à roulement, ou des surfaces de guidage de paliers hydrodynamiques.
- lesdites surfaces sont situées respectivement dans deux plans qui sont perpendiculaires au second axe et qui passent par les deux séries de dents de la seconde denture du satellite ;
- le solaire a une forme générale tubulaire et comprend à une extrémité axiale une bride annulaire d'accouplement audit premier arbre de rotor ;
- les deux séries de dents de chaque denture sont en chevron ;
- le porte-satellites comprend deux disques et les satellites s'étendent axialement entre les disques et sont fixés à ces disques ;
   -- les deux paliers de guidage d'un satellite ne s'étendent pas à l'intérieur de la seconde denture de ce satellite ;
   - lesdites surfaces sont séparées l'une de l'autre d'une distance axiale qui est supérieure à une dimension axiale de chacune de ces surfaces ;
   -- lesdites paliers sont séparés l'un de l'autre d'une distance axiale qui est supérieure à une dimension axiale de chacun de ces paliers ;
   - lesdites surfaces sont séparées l'une de l'autre d'une distance axiale qui représente au moins 80% d'une dimension axiale de la seconde denture ;-lesdits paliers sont séparés l'un de l'autre d'une distance axiale qui représente au moins 80% d'une dimension axiale de la seconde denture ;
   -- les corps cylindriques satellites s'étendent axialement entre les disques et sont fixés à ces disques ;
   -- les corps cylindriques satellites sont répartis autour du premier axe et définissant lesdits seconds axes, ces corps cylindriques traversant respectivement les satellites en vue de leur guidage ;
   -- la complémentarité de formes est du type P3G.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en coupe axiale d'une turbomachine utilisant l'invention,
[Fig.2] la figure 2 est une vue partielle en coupe axiale d'un réducteur mécanique,
[Fig.3] la figure 3 est une autre vue partielle en coupe axiale d'un réducteur mécanique, et illustre la technique antérieure à la présente invention,
[Fig.4] la figure 4 est une vue schématique en coupe axiale et en perspective d'un réducteur à double étage d'engrènement symétrique, et illustre également la technique antérieure à la présente invention,
[Fig.5] la figure 5 est une autre vue schématique en coupe axiale du réducteur de la figure 4 ;
[Fig.6] la figure 6 est une vue très schématique partielle en coupe axiale d'un réducteur selon l'invention,
[Fig.7] la figure 7 est une vue très schématique partielle en coupe axiale d'une turbomachine selon l'invention,
[Fig.8] la figure 8 est une vue schématique en perspective et en coupe axiale d'un réducteur selon un mode de réalisation de l'invention,
[Fig.9] la figure 9 est une vue schématique en perspective et en coupe axiale d'un satellite pour une variante de réalisation du réducteur selon l'invention, et
[Fig.10] la figure 10 est une vue schématique de face et à plus grande échelle d'une partie du satellite de la figure 9.

### Description détaillée de l'invention

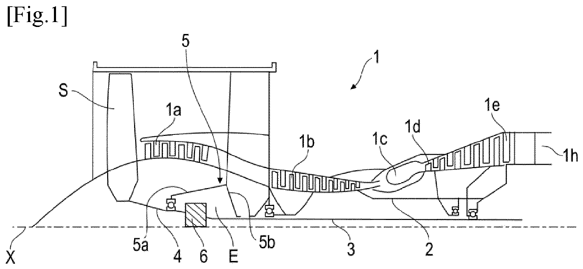

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé par l'arbre BP 3 au moyen d'un réducteur 6. Ce réducteur 6 est généralement de type planétaire ou épicycloïdal.

La description qui suit concerne un réducteur du type épicycloïdal, dont le porte-satellites et le solaire sont mobiles en rotation, la couronne du réducteur étant fixe dans le repère du moteur.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

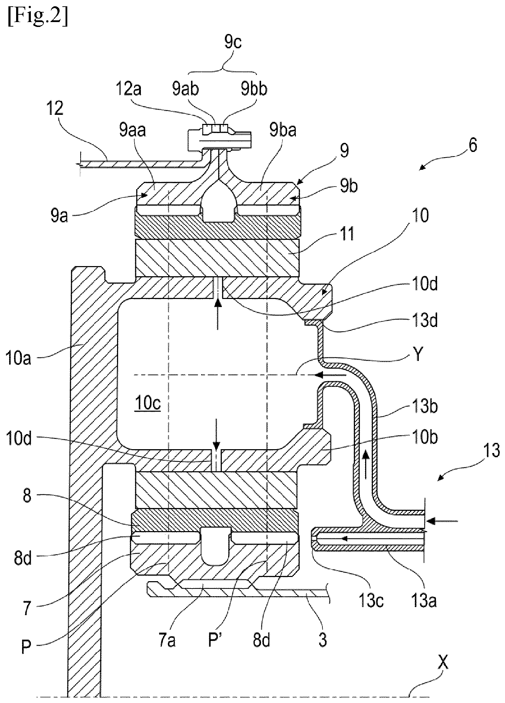

La figure 2 montre un réducteur épicycloïdal 6. En entrée, le réducteur 6 est relié à l'arbre BP 3, par exemple par l'intermédiaire de cannelures internes 7a. Ainsi, l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenu par un châssis appelé porte-satellites 10. Chaque satellite 8 tourne autour de son propre axe Y, et engrène avec la couronne 9.

En sortie nous avons :
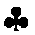 Dans cette configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.
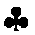 Dans une autre configuration planétaire, l'ensemble des satellites 8 est maintenu par un porte-satellites 10 qui est fixé au carter moteur ou stator 5. Chaque satellite 8 entraine la couronne qui est rapportée à l'arbre de soufflante 4 via un porte-couronne 12.
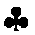 Dans une autre configuration différentielle, l'ensemble des satellites 8 est maintenu par un porte-satellites 10 qui est relié à un premier arbre de soufflante 5. Chaque satellite 8 entraine la couronne 9 qui est solidarisée à l'arbre de soufflante 4 via le porte-couronne 12.

Chaque satellite 8 est monté libre en rotation à l'aide d'un palier 11, par exemple de type roulement ou palier hydrodynamique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange, les axes 10b et le châssis 10a peuvent être séparés en plusieurs pièces.

Pour les mêmes raisons citées précédemment, la denture d'un satellite peut être séparée en plusieurs hélices ou dents présentant chacun un plan médian P, P'. Dans notre exemple, nous détaillons le fonctionnement d'un réducteur dont chaque satellite comprend deux séries de dents en chevron coopérant avec une couronne séparée en deux demi-couronnes :
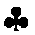 Une demi-couronne amont 9a constituée d'une jante 9aa et d'une demi-bride de fixation 9ab. Sur la jante 9aa se trouve l'hélice avant engrenée avec une hélice de la denture 8d de chaque satellite 8. L'hélice de la denture 8d engrène également avec celle du solaire 7.
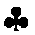 Une demi-couronne aval 9b constituée d'une jante 9ba et d'une demi-bride de fixation 9bb. Sur la jante 9ba se trouve l'hélice arrière engrenée avec une hélice de la denture 8d de chaque satellite 8. L'hélice de la denture 8d engrène également avec celle du solaire 7.

Si les largeurs d'hélice varient entre le solaire 7, les satellites 8 et la couronne 9 à cause des recouvrements de denture, elles sont toutes centrées sur un plan médian P pour les dents amont et sur un autre plan médian P' pour les dents aval.

La figure 2 illustre ainsi le cas d'un réducteur 6 à simple étage d'engrènement, c'est-à-dire qu'une même denture 8d de chaque satellite 8 coopère à la fois avec le solaire 7 et la couronne 9. Même si la denture 8d comprend deux séries de dents, ces dents ont le même diamètre moyen et forment une seule et même denture appelée chevron.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans un distributeur 13 par différents moyens qui ne seront pas précisés dans cette vue car ils sont spécifiques à un ou plusieurs types d'architecture. Le distributeur 13 comprend des injecteurs 13a et des bras 13b. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

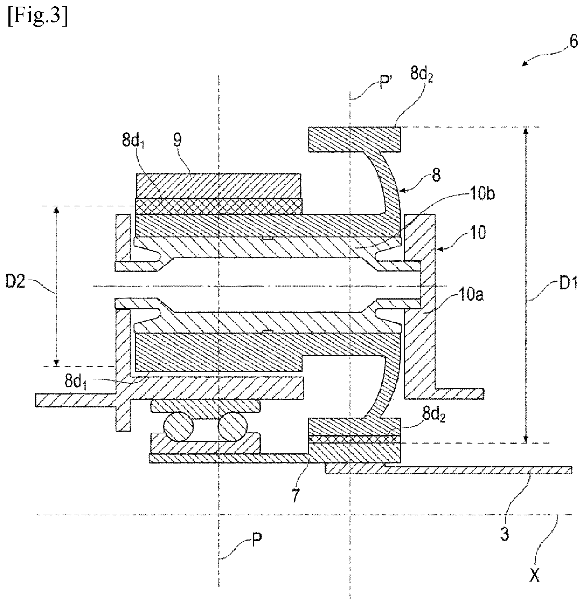

La figure 3 montre un autre exemple d'architecture de réducteur 6, dit à double étage d'engrènement, dans lequel chaque satellite 8 comprend deux dentures 8d1, 8d2 distinctes configurées pour coopérer respectivement avec la couronne 9 et le solaire 7.

Dans cette figure 3, les éléments déjà décrits dans ce qui précède sont désignés par les mêmes références.

La denture 8d1 d'engrènement avec la couronne 9 a un diamètre moyen noté D2 et est situé dans un plan médian P. La denture 8d2 d'engrènement avec le solaire 7 a un diamètre moyen noté D1 et est situé dans un autre plan médian P'. Les plans médians P, P' sont parallèles entre eux et perpendiculaires à l'axe X. Le diamètre D2 est inférieur au diamètre D1. Enfin, chaque denture 8d1, 8d2 comprend ici une seule hélice ou série de dents.

Comme évoqué dans ce qui précède, cette architecture « double étage » génère des moments non négligeables au niveau des satellites 8 en particulier car ce double étage est à denture asymétrique.

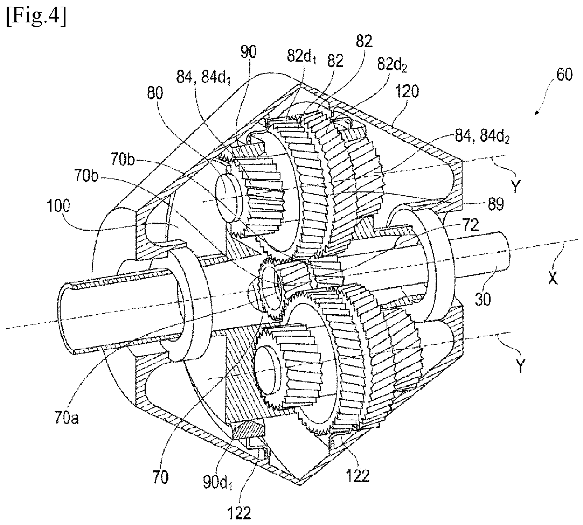

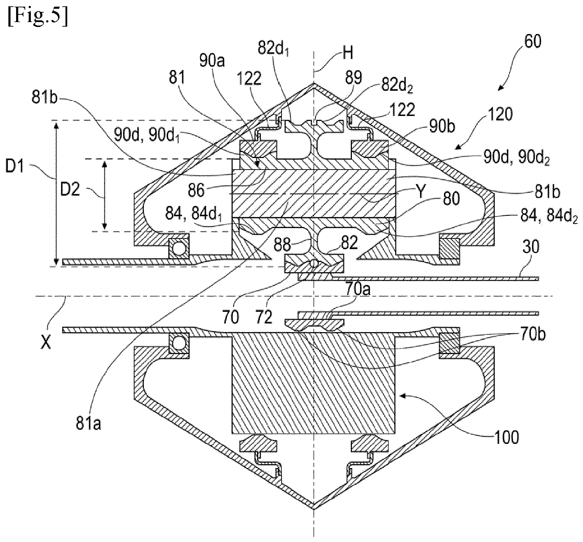

Les figures 4 et 5 montrent un réducteur 60 à double denture symétrique, qui permet de résoudre le problème précité.

Ce réducteur 60 comprend :
- un solaire 70 ayant un axe de rotation X,
- une couronne 90 qui s'étend autour du solaire 70 et qui est configurée pour être immobile en rotation autour de l'axe X, et
- des satellites 80 qui sont engrenés avec le solaire 70 et la couronne 90 et qui sont maintenus par un porte-satellites 100 qui est configuré pour être mobile en rotation autour de l'axe X.

On définit le plan H comme étant un plan médian perpendiculaire à l'axe X et passant sensiblement au milieu du réducteur 60 (figure 5).

Le solaire 70 comprend des cannelures internes 70a d'accouplement avec l'arbre BP 30 ainsi qu'une denture externe 70b d'engrènement avec les satellites 80. La denture 70b présente deux séries de dents adjacentes en chevron, séparées l'une de l'autre par une rainure annulaire 72 orientée radialement vers l'extérieur. La denture 70b est symétrique par rapport au plan H, ses dents étant situées de part et d'autre du plan H qui passe par la rainure 72.

La couronne 90 est formée par deux anneaux indépendants 90a, 90b et comprend une denture 90d qui est séparée en deux séries de dents 90d1, 90d2 en chevron portées respectivement par les deux anneaux.

Les anneaux 90a, 90b sont disposés de manière symétrique par rapport au plan H qui s'étend donc entre ces anneaux. Les anneaux sont reliés et fixés à un porte-couronne 120 par l'intermédiaire de flasques annulaires 122 de liaison. Les flasques 122 sont indépendants l'un de l'autre, chaque flasque ayant en demi section axiale une forme générale en S lui procurant une certaine souplesse radiale par déformation élastique en fonctionnement. Chaque anneau 90a, 90b s'étend autour de l'axe X et est fixé au flasque 122 correspondant par sa périphérie externe. Sa périphérie interne comprend une des séries de dents 90d1, 90d2.

Comme c'est le cas de la couronne 90, le porte-couronne 120 présente une symétrie par rapport au plan H.

Chaque satellite 80 comporte une première denture 82 de diamètre moyen D1 pour l'engrènement avec le solaire 70, et une seconde denture 84 de diamètre moyen D2, différent de D1 et en particulier inférieur à D1, pour l'engrènement avec la couronne 90. Les diamètres moyens sont mesurés depuis l'axe Y de chaque satellite 80 et représentent chacun la moyenne entre le diamètre maximal et le diamètre minimal d'une denture de ce satellite.

Chaque satellite 80 comprend un manchon cylindrique 86 et un voile annulaire 88 s'étendant sensiblement radialement vers l'extérieur depuis le milieu de ce manchon 86. La denture 84 est séparée en deux séries de dents 84d1, 84d2 en chevron qui sont situées respectivement sur les extrémités axiales du manchon 86. La denture 82 comprend deux séries de dents 82d1, 82d2 en chevron qui sont situées à la périphérie externe du voile 88 et qui sont séparées l'une de l'autre par une rainure annulaire 89 débouchant radialement vers l'extérieur par rapport à l'axe Y.

La denture 82 est traversée en son milieu par le plan H qui passe par la rainure 89, les dents 82d1, 82d2 étant donc disposées de part et d'autre du plan H. Les dents 84d1, 84d2 sont également disposées de manière symétrique par rapport au plan H.

La denture 82 et la périphérie externe du voile 88 ont une dimension axiale qui est inférieure à la distance axiale entre les anneaux 90a, 90b, ainsi qu'entre les flasques 122, de façon à ce que chaque satellite 80 puisse librement tourner dans le porte-couronne 120 et entre les anneaux 90a, 90b et les flasques 122.

Chacun des satellites 80 est guidé en rotation par un palier hydrodynamique 81 qui comprend un corps cylindrique 81a qui traverse le satellite 80, et en particulier son manchon 86, et qui est configuré pour former un film d'huile de guidage à l'intérieur du satellite.

Le corps 81a d'un palier 81 s'étend le long de l'axe Y et comprend à ses extrémités longitudinales des extensions 81b logées dans des orifices formant des sièges du porte-satellites 100.

Le corps 81a est en général tubulaire et comprend une cavité interne de circulation d'huile qui communique en général avec des premières canalisations d'amenée d'huile jusqu'à une surface cylindrique externe du corps 81a en vue de la formation du film d'huile entre cette surface et une surface cylindrique interne du satellite 80.

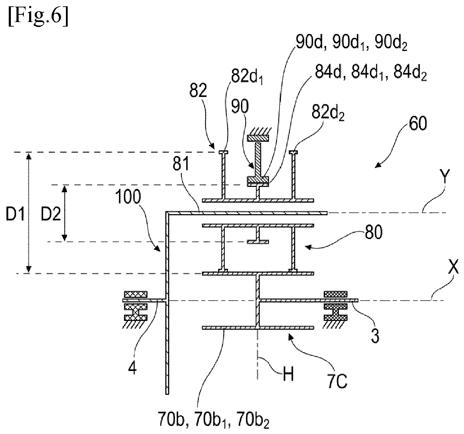

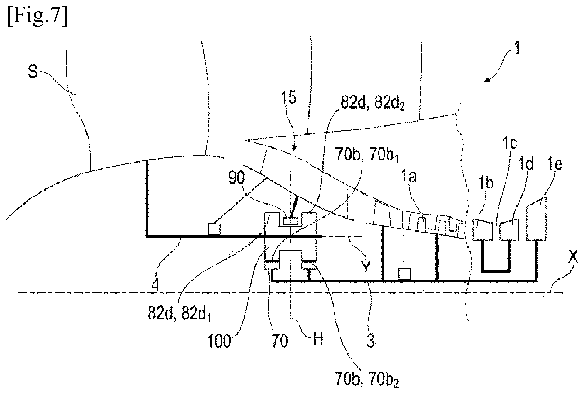

Les figures 6 et 7 illustrent le principe général de l'invention. La figure 6 montre un réducteur mécanique 60 seul et la figure 7 montre une turbomachine 1 comportant ce réducteur 60.

La turbomachine 1 est similaire à celle de la figure 1 donc la description qui précède en relation avec la figure 1 s'applique à la turbomachine 1 de la figure 7.

Dans le cas présent, le réducteur 60 des figures 6 et 7 est un réducteur épicycloïdal c'est-à-dire que sa couronne 90 est fixe et que son porte-satellites 100 est mobile en rotation.

Le réducteur 60 comprend :
- un solaire 70 qui a un premier axe X de rotation centré sur l'axe principal de la turbomachine 1.
- une couronne 90 qui s'étend autour du solaire 70 et du premier axe X,
- des satellites 80 qui sont engrenés avec le solaire 70 et la couronne 90, et
- un porte-satellites 100 qui a un axe de rotation confondu avec le premier axe X et qui comprend une cavité interne de logement du solaire 70, le porte-satellites 100 portant des paliers 81 de guidage en rotation des satellites 80 autour des seconds axes Y.

Le solaire 70 est accouplé avec un premier arbre de rotor de la turbomachine 1, qui est ici l'arbre basse pression 3.

Le porte-satellites 100 est accouplé avec un second arbre de rotor de la turbomachine 1, qui est ici l'arbre de soufflante 4.

La couronne 90 est fixée à un stator de la turbomachine 1. Dans l'exemple représenté, elle est fixée à un carter intermédiaire 15 ou à un carter d'entrée de la turbomachine 1.

Chaque satellite 80 a un second axe Y de rotation parallèle au premier axe X et comporte une première denture 82 d'engrènement avec le solaire 70, et une seconde denture 84 d'engrènement avec la couronne 90.

La première denture 82 de chaque satellite 80 comporte deux séries de dents 82d1, 82d2 qui sont à distance axiale l'une de l'autre et qui sont disposées de part et d'autre du plan médian H du satellite 80.

La seconde denture 84 de chaque satellite 80 est disposée entre les deux séries de dents 82a, 82b de la première denture 82 et comporte deux séries de dents 84d1, 84d2 qui sont à distance axiale l'une de l'autre et qui sont disposées de part et d'autre du plan médian H.

Le plan médian H est perpendiculaire à l'axe Y du satellite 80 et peut être un plan de symétrie de ce satellite 80.

La première denture 82 de chaque satellite 80 a un diamètre D1 qui est ici supérieur au diamètre D2 de la seconde denture 84 du satellite 80.

Dans la figure 7, on constate que la denture 70b du solaire 70 est formée par deux séries de dents 70b1, 70b2 qui sont à distance axiale l'une de l'autre et qui engrènent respectivement avec les deux séries de dents 82d1, 82d2 de la première denture 82 de chaque satellite 80.

On constate également que la couronne 90 passe entre les deux séries de dents 82d1, 82d2 de la première denture 82 de chaque satellite 80, ce qui permet de réduire l'encombrement du réducteur 60.

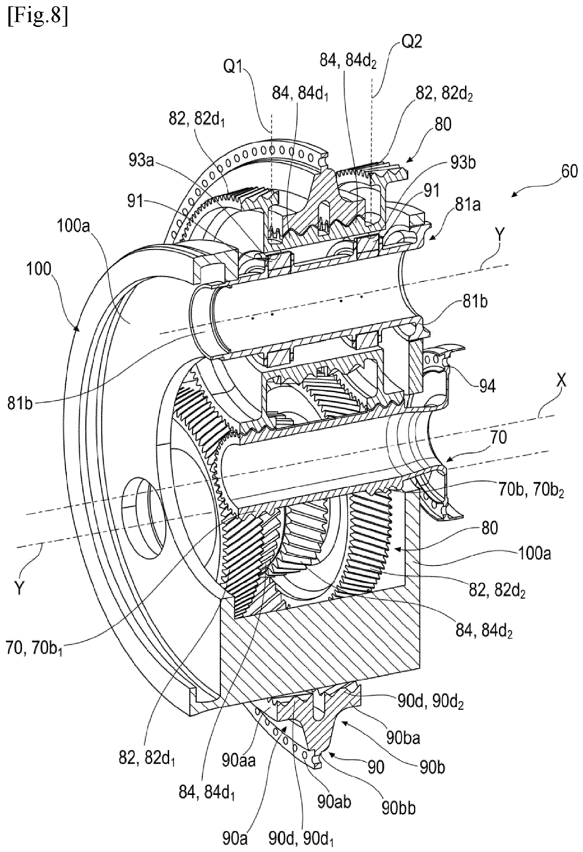

On se réfère maintenant à la figure 8 qui illustre un mode de réalisation plus concret d'un réducteur 60 pour la turbomachine 1 selon l'invention.

On constate que la couronne 90 comprend une denture 90d formée par deux séries de dents 90d1, 90d2 qui sont à distance axiale l'une de l'autre et qui engrènent respectivement avec les deux séries de dents 84d1, 84d2 de la seconde denture 84 de chaque satellite 80.

La couronne 90 est séparée en deux demi-couronnes :
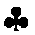 une demi-couronne amont 90a constituée d'une jante 90aa et d'une demi-bride de fixation 90ab. Sur la jante 90aa se trouve la première série de dents 90d1 de la denture 90d qui est engrenée avec une des séries de dents 84d1 de la seconde denture 84 de chaque satellite 80 ;
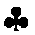 une demi-couronne aval 90b constituée d'une jante 90ba et d'une demi-bride de fixation 90bb. Sur la jante 90ba se trouve la seconde série de dents 90d2 de la denture 90d qui est engrenée avec l'autre des séries de dents 84d2 de la seconde denture 84 de chaque satellite 80.

Les deux demi-couronnes 90a, 90b sont symétriques et disposées entre les deux séries de dents 82d1, 82d2 de la première denture 82 de chaque satellite 80.

Les séries de dents 82d1, 82d2, 84d1, 84d2, des dentures 82, 84 sont ici en chevron. C'est également le cas des séries de dents 70b1, 70b2, 90d1, 90d2 des dentures 70b, 90d.

Dans l'exemple représenté, chacun des satellites 80 est formé d'une seule pièce.

En variante, la couronne 90 pourrait également être formée d'une seule pièce.

Le porte-satellites 100 comprend deux disques 100a et les corps cylindrique 81a qui s'étendent entre les disques 100a et sont fixés à ces disques. Les corps cylindriques 81a sont répartis autour de l'axe et définissent les axes Y.

Ces corps 81a traversent respectivement les satellites 80 en vue de leur guidage.

Chacun des satellites 80 est centré et guidé en rotation par des paliers à roulement 91 montés autour d'un corps cylindrique 81a.

Dans l'exemple représenté, les paliers 91 sont au nombre de deux par satellite 80.

Les paliers 91 sont de préférence respectivement situés au droit des deux séries de dents 82d1, 82d2 de la première denture 82 de chaque satellite 80.

Le corps 81a s'étend le long de l'axe Y et comprend à ses extrémités longitudinales des extensions 81b logées dans des orifices formant des sièges du porte-satellites 100.

Le corps 81a est en général tubulaire et comprend une cavité interne de circulation d'huile qui communique en général avec des canalisations d'amenée d'huile jusqu'à une surface cylindrique externe du corps 81a en vue de la lubrification des paliers à roulement 91.

Les paliers à roulement 91 sont ici des paliers à rouleaux et comprennent des éléments roulants (rouleaux) qui sont montés dans une cage interne intégrée au corps 81a et qui roulent respectivement sur deux surfaces cylindriques internes 93a, 93b du satellite 80.

Les surfaces 93a, 93b sont à distance axiale l'une de l'autre, de part et d'autre du plan H, et sont situées respectivement dans deux plans Q1, Q2 qui sont perpendiculaires au second axe Y et qui passent par les deux séries de dents 82d1, 82d2 de la première denture 82 du satellite 80.

Les surfaces 93a, 93b sont séparées l'une de l'autre d'une distance axiale qui est supérieure à une dimension axiale de chacune de ces surfaces. Ces surfaces sont séparées l'une de l'autre d'une distance axiale qui représente au moins 80% d'une dimension axiale de la seconde denture 84.

L'utilisation de satellites 80 à double étage symétrique permet de limiter l'apparition de moments sur les paliers 91.

Le solaire 70 a une forme générale tubulaire et comprend à une extrémité axiale une bride annulaire 94 d'accouplement au premier arbre de rotor 3 précité.

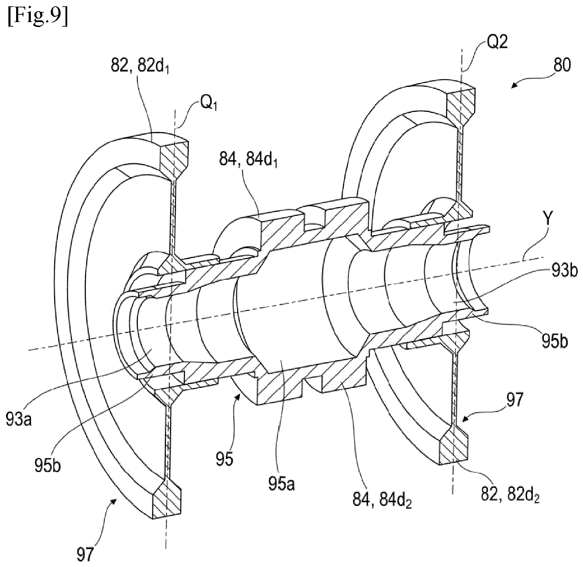

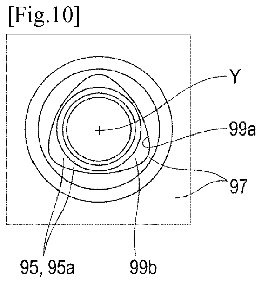

On se réfère maintenant aux figures 9 et 10 qui illustrent une variante de réalisation des satellites 80 du réducteur 60. Le réducteur de la figure 8 peut être équipé des satellites 80 des figures 9 et 10.

Dans l'exemple représenté, chacun des satellites 80 est formé par l'assemblage d'au moins trois pièces dont :
- une pièce tubulaire 95 centrée sur le second axe Y, cette pièce tubulaire 95 comportant une partie médiane 95a comportant les deux séries de dents 84d1, 84d2 de la seconde denture 84, et
- deux voiles annulaires 97 qui sont centrées sur le second axe Y et qui sont montées respectivement sur deux extrémités axiales 95b opposées de la première pièce 92, ces voiles annulaires 97 en forme de voile annulaire comportant respectivement à leurs périphéries externes les deux séries de dents 82d1, 82d2 de la première denture 82.

Les voiles annulaires 97 comprennent chacune à leurs périphéries internes un logement 99a non circulaire, par exemple avec des protubérances, qui coopère par complémentarité de formes avec une protubérance 99b de l'extrémité 95b correspondante de la pièce tubulaire 95 afin que les voiles annulaires 97 en forme de disque soient solidaires en rotation de la pièce tubulaire 95. Cette complémentarité de formes est par exemple du type liaison P3G.

Chacun des satellites 80 comprend deux surfaces cylindriques internes 93a, 93b qui sont à distance axiale l'une de l'autre et forment respectivement des surfaces de roulement de paliers à roulement. Ces surfaces 93a, 93b sont situées respectivement dans deux plans Q1, Q2 qui sont perpendiculaires au second axe Y et qui passent par les deux séries de dents 82d1, 82d2 de la première denture 82 du satellite 80.

Les surfaces 93a, 93b sont séparées l'une de l'autre d'une distance axiale qui est supérieure à une dimension axiale de chacune de ces surfaces. Ces surfaces sont séparées l'une de l'autre d'une distance axiale qui représente plus de 100% d'une dimension axiale de la seconde denture 84.

Dans une autre variante de réalisation non représentée, les paliers de guidage des satellites pourraient être des paliers hydrodynamiques comme illustré à la figure 5 notamment.

Le réducteur selon l'invention est adapté pour fournir des rapports de réduction importants, et par exemple supérieur à 5. Il bénéficie d'un encombrement radial limité ce qui facilite son intégration dans une turbomachine. La turbomachine est de préférence à double flux.

## Revendications

1. Turbomachine (1) d'aéronef, comprenant un réducteur mécanique (60) comportant :
- un solaire (70) qui a un premier axe (X) de rotation centré sur un axe principal de la turbomachine,
- une couronne (90) qui s'étend autour du solaire (70) et dudit premier axe (X),
- des satellites (80) qui sont engrenés avec le solaire (70) et la couronne (90), chaque satellite (80) ayant un second axe (Y) de rotation parallèle audit premier axe (X) et comportant une première denture (82) d'engrènement avec le solaire (70), et une seconde denture (84) d'engrènement avec la couronne (90), la première denture (82) de chaque satellite (80) comportant deux séries de dents (82d1, 82d2) qui sont à distance axiale l'une de l'autre et qui sont disposées de part et d'autre d'un plan médian (H) du satellite qui est perpendiculaire au second axe (Y) de ce satellite,
- un porte-satellites (100) qui a un axe de rotation confondu avec ledit premier axe (X) et qui comprend une cavité interne de logement du solaire (70), le porte-satellites (100) portant des paliers (81) de guidage en rotation des satellites (80) autour de leurs seconds axes (Y),
- le solaire (70) est accouplé avec un premier arbre de rotor (3) de la turbomachine (1),
**caractérisée en ce que** :
- la seconde denture (84) de chaque satellite (80) étant disposée entre les deux séries de dents (82d1, 82d2) de la première denture (82) et comportant deux séries de dents (84d1, 84d2) qui sont à distance axiale l'une de l'autre et qui sont disposées de part et d'autre dudit plan médian (H) du satellite,
- la première denture (82) de chaque satellite (80) ayant un diamètre (D1) supérieur à celui de la seconde denture (84) du satellite,
- le porte-satellites (100) est accouplé avec un second arbre de rotor (4) de la turbomachine (1), et
- la couronne (90) est fixée à un stator (15) de la turbomachine (1),
et **en ce que** chaque satellite (80) est de préférence guidé en rotation par deux paliers de guidage (91) qui sont respectivement situés au droit desdites deux séries de dents (82d1, 82d2) de la première denture (82) de ce satellite.

2. Turbomachine (1) selon la revendication précédente, dans laquelle ledit plan médian (H) est un plan médian de symétrie.

3. Turbomachine (1) selon la revendication 1 ou 2, dans laquelle le solaire (70) comprend une denture (70b) formée par deux séries de dents (70b1, 70b2) qui sont à distance axiale l'une de l'autre et qui engrènent respectivement avec les deux séries de dents (82d1, 82d2) de la première denture (82) de chaque satellite (80).

4. Turbomachine (1) selon l'une des revendications précédentes, dans laquelle la couronne (90) comprend une denture (90d) formée par deux séries de dents (90d1, 90d2) qui sont à distance axiale l'une de l'autre et qui engrènent respectivement avec les deux séries de dents (84d1, 84d2) de la seconde denture (84) de chaque satellite (80).

5. Turbomachine (1) selon l'une des revendications précédentes, dans laquelle la couronne (90) présente une demi-couronne avant et une demi-couronne arrière, les demi-couronnes étant symétriques et étant disposée entre les deux séries de dents (82d1, 82d2) de la première denture (82) de chaque satellite (80).

6. Turbomachine (1) selon l'une des revendications précédentes, dans laquelle chacun des satellites (80) est formé d'une seule pièce.

7. Turbomachine (1) selon l'une des revendications 1 à 5, dans laquelle chacun des satellites (80) est formé par l'assemblage d'au moins trois pièces dont :
- une pièce tubulaire (95) centrée sur le second axe (Y), cette pièce tubulaire (95) comportant une partie médiane (95a) comportant les deux séries de dents (84d1 ,84d2) de la seconde denture (84d), et
- deux voiles annulaires (97) qui sont centrés sur le second axe (Y) et s'étendent aux deux extrémités axiales opposées de la première pièce (95), ces voiles annulaires (97) comportant respectivement à leurs périphéries externes les deux séries de dents (82d1, 82d2) de la première denture (82).

8. Turbomachine (1) selon la revendication 7, dans laquelle les voiles annulaires (97) comprennent chacun à leurs périphéries internes un logement (99a) non circulaire qui coopère par complémentarité de formes avec au moins une protubérance (99b) de l'extrémité correspondante de la pièce tubulaire (95) afin que les voiles annulaires (97) en forme de disque soient solidaires en rotation de la pièce tubulaire (95).

9. Turbomachine (1) selon l'une des revendications précédentes, dans laquelle chacun des satellites (80) comprend deux surfaces cylindriques internes (93a, 93b) qui sont à distance axiale l'une de l'autre et forment respectivement des surfaces de roulement de paliers à roulement (91), ou des surfaces de guidage de paliers hydrodynamiques.

10. Turbomachine (1) selon la revendication 9, dans laquelle lesdites surfaces (93a, 93b) sont situées respectivement dans deux plans (Q1, Q2) qui sont perpendiculaires au second axe (Y) et qui passent par les deux séries de dents (84d1 ,84d2) de la seconde denture (84) du satellite (80).

11. Turbomachine (1) selon la revendication 9 ou 10, dans laquelle lesdites surfaces (93a, 93b) sont séparées l'une de l'autre d'une distance axiale qui est supérieure à une dimension axiale de chacune de ces surfaces.

12. Turbomachine (1) selon l'une des revendications 9 à 11, dans laquelle lesdites surfaces (93a, 93b) sont séparées l'une de l'autre d'une distance axiale qui représente au moins 80% d'une dimension axiale de la seconde denture (84).

13. Turbomachine (1) selon l'une des revendications précédentes, dans laquelle le solaire (70) a une forme générale tubulaire et comprend à une extrémité axiale une bride annulaire (94) d'accouplement audit premier arbre de rotor (3).

14. Turbomachine (1) selon l'une des revendications précédentes, dans laquelle les deux séries de dents (82d1, 82d2, 84d1, 84d2) de chaque denture (82, 84) sont en chevron.

15. Turbomachine (1) selon l'une des revendications précédentes, dans laquelle le porte-satellites (100) comprend deux disques (100a) et les satellites (80a) s'étendent axialement entre les disques (100a) et sont fixés à ces disques (100a).

## Patentansprüche

1. Turbotriebwerk (1) eines Luftfahrzeugs, umfassend ein mechanisches Untersetzungsgetriebe (60), das Folgendes umfasst:
- ein Sonnenrad (70), das eine erste Drehachse (X) aufweist, die um eine Hauptachse des Turbotriebwerks zentriert ist,
- eine Krone (90), die sich um das Sonnenrad (70) und um die erste Achse (X) erstreckt,
- Satelliten (80), die mit dem Sonnenrad (70) und der Krone (90) in Eingriff stehen, wobei jeder Satellit (80) eine zweite Drehachse (Y) aufweist, die parallel zur ersten Achse (X) ist und eine erste Verzahnung (82) zum Eingriff mit dem Sonnenrad (70) und eine zweite Verzahnung (84) zum Eingriff mit der Krone (90) umfasst, wobei die erste Verzahnung (82) jedes Satelliten (80) zwei Zahnreihen (82d1, 82d2) umfasst, die in einem axialen Abstand voneinander beabstandet sind und die beiderseits einer mittleren Ebene (H) des Satelliten angeordnet sind, die senkrecht zur zweiten Achse (Y) dieses Satelliten ist,
- einen Satellitenträger (100), der eine Drehachse aufweist, die mit der ersten Achse (X) zusammenfällt und die einen inneren Hohlraum zur Aufnahme des Sonnenrads (70) umfasst, wobei der Satellitenträger (100) Lager (81) zur drehenden Führung der Satelliten (80) um ihre zweiten Achsen (Y) trägt,
- das Sonnenrad (70) mit einer ersten Rotorwelle (3) des Turbotriebwerks (1) gekoppelt ist,
**dadurch gekennzeichnet, dass**:
- die zweite Verzahnung (84) jedes Satelliten (80) zwischen den zwei Zahnreihen (82d1, 82d2) der ersten Verzahnung (82) angeordnet ist und zwei Zahnreihen (84d1, 84d2) umfasst, die in einem axialen Abstand voneinander beabstandet sind und die beiderseits der mittleren Ebene (H) des Satelliten angeordnet sind,
- eine erste Verzahnung (82) jedes Satelliten (80) einen Durchmesser (D1) aufweist, der größer ist als jener der zweiten Verzahnung (84) des Satelliten,
- der Satellitenträger (100) mit einer zweiten Rotorwelle (4) des Turbotriebwerks (1) gekoppelt ist, und
- die Krone (90) an einem Stator (15) des Turbotriebwerks (1) festgemacht ist,
und dadurch, dass jeder Satellit (80) vorzugsweise durch zwei Führungslager (91) drehend geführt wird, die jeweils direkt über den zwei Zahnreihen (82d1, 82d2) der ersten Verzahnung (82) dieses Satelliten gelegen sind.

2. Turbotriebwerk (1) nach dem vorstehenden Anspruch, wobei die mittlere Ebene (H) eine mittlere Symmetrieebene ist.

3. Turbotriebwerk (1) nach Anspruch 1 oder 2, wobei das Sonnenrad (70) eine Verzahnung (70b) umfasst, die durch zwei Zahnreihen (70b1, 70b2) gebildet ist, die in einem axialen Abstand voneinander beabstandet sind und die jeweils mit den zwei Zahnreihen (82d1, 82d2) der ersten Verzahnung (82) jedes Satelliten (80) in Eingriff stehen.

4. Turbotriebwerk (1) nach einem der vorstehenden Ansprüche, wobei die Krone (90) eine Verzahnung (90d) umfasst, die durch zwei Zahnreihen (90d1, 90d2) gebildet ist, die in einem axialen Abstand voneinander beabstandet sind und die jeweils mit den zwei Zahnreihen (84d1, 84d2) der zweiten Verzahnung (84) jedes Satelliten (80) in Eingriff stehen.

5. Turbotriebwerk (1) nach einem der vorstehenden Ansprüche, wobei die Krone (90) eine vordere Halbkrone und eine hintere Halbkrone aufweist, wobei die Halbkronen symmetrisch sind und zwischen den zwei Zahnreihen (82d1, 82d2) der ersten Verzahnung (82) jedes Satelliten (80) angeordnet sind

6. Turbotriebwerk (1) nach einem der vorstehenden Ansprüche, wobei jeder der Satelliten (80) einstückig gebildet ist.

7. Turbotriebwerk (1) nach einem der Ansprüche 1 bis 5, wobei jeder der Satelliten (80) durch die Zusammenfügung von mindestens drei Werkstücken gebildet ist, darunter:
ein rohrförmiges Werkstück (95), das auf der zweiten Achse (Y) zentriert ist, wobei dieses rohrförmige Werkstück (95) einen mittleren Teil (95a) umfasst, der die zwei Zahnreihen (84d1, 84d2) der zweiten Verzahnung (84d) umfasst, und
- zwei ringförmige Schalen (97), die auf der zweiten Achse (Y) zentriert sind und sich an den beiden gegenüberliegenden axialen Enden des ersten Werkstücks (95) erstrecken, wobei diese ringförmigen Schalen (97) an ihrem Außenumfang jeweils die zwei Zahnreihen (82d1, 82d2) der ersten Verzahnung (82) umfassen.

8. Turbotriebwerk (1) nach Anspruch 7, wobei die ringförmigen Schalen (97) an ihrem Innenumfang jeweils eine nichtkreisförmige Aufnahme (99a) umfassen, die durch Formkomplementarität mit mindestens einem Vorsprung (99b) des entsprechenden Endes des rohrförmigen Werkstücks (95) zusammenwirkt, damit die ringförmigen Schalen (97) in Form einer Scheibe drehfest mit dem rohrförmigen Werkstück (95) sind.

9. Turbotriebwerk (1) nach einem der vorstehenden Ansprüche, wobei jeder der Satelliten (80) zwei innere zylindrische Flächen (93a, 93b) umfasst, die in einem axialen Abstand voneinander beabstandet sind und jeweils Wälzflächen für Wälzlager (91) oder Führungsflächen für hydrodynamische Lager bilden.

10. Turbotriebwerk (1) nach Anspruch 9, wobei die Flächen (93a, 93b) jeweils in zwei Ebenen (Q1, Q2) gelegen sind, die senkrecht zur zweiten Achse (Y) sind und die durch die zwei Zahnreihen (84d1, 84d2) der zweiten Verzahnung (84) des Satelliten (80) verlaufen.

11. Turbotriebwerk (1) nach Anspruch 9 oder 10, wobei die Flächen (93a, 93b) in einem axialen Abstand voneinander beabstandet sind, der größer ist als eine axiale Abmessung jeder dieser Flächen.

12. Turbotriebwerk (1) nach einem der Ansprüche 9 bis 11, wobei die Flächen (93a, 93b) in einem axialen Abstand voneinander beabstandet sind, der mindestens 80% einer axialen Abmessung der zweiten Verzahnung (84) darstellt.

13. Turbotriebwerk (1) nach einem der vorstehenden Ansprüche, wobei das Sonnenrad (70) eine allgemeine rohrförmige Form aufweist und an einem axialen Ende einen ringförmigen Flansch (94) zur Kopplung mit der ersten Rotorwelle (3) umfasst.

14. Turbotriebwerk (1) nach einem der vorstehenden Ansprüche, wobei die zwei Zahnreihen (82d1, 82d2, 84d1, 84d2) jeder Verzahnung (82, 84) in einem Fischgratmuster sind.

15. Turbotriebwerk (1) nach einem der vorstehenden Ansprüche, wobei der Satellitenträger (100) zwei Scheiben (100a) umfasst und die Satelliten (80a) sich axial zwischen den Scheiben (100a) erstrecken und an diesen Scheiben (100a) festgemacht sind.

## Claims

1. An aircraft turbomachine (1), comprising a mechanical reduction gear (60) comprising:
- a sun gear (70) which has a first axis (X) of rotation centred on a main axis of the turbomachine,
- a ring gear (90) that extends around the sun gear (70) and said first axis (X),
- planet gears (80) which are meshed with the sun gear (70) and the ring gear (90), each planet gear (80) having a second axis (Y) of rotation parallel to said first axis (X) and comprising a first toothing (82) meshing with the sun gear (70), and a second toothing (84) meshing with the ring gear (90), the first toothing (82) of each planet gear (80) comprising two series of teeth (82d1, 82d2) which are at an axial distance from one another and which are disposed on either side of a median plane (H) of the planet gear which is perpendicular to the second axis (Y) of this planet gear,
- a planet carrier (100) which has an axis of rotation coincident with said first axis (X) and which comprises an internal cavity for housing the sun gear (70), the planet carrier (100) carrying bearings (81) for guiding the planet gears (80) in rotation around their second axes (Y),
- the sun gear (70) is coupled to a first rotor shaft (3) of the turbomachine (1), **characterised in that**:
- the second toothing (84) of each planet gear (80) being arranged between the two series of teeth (82d1, 82d2) of the first toothing (82) and comprising two series of teeth (84d1, 84d2) which are at an axial distance from each other and which are arranged on either side of said median plane (H) of the planet gear,
- the first toothing (82) of each planet gear (80) having a diameter (D1) greater than that of the second toothing (84) of the planet gear,
- the planet carrier (100) is coupled to a second rotor shaft (4) of the turbomachine (1), and
- the ring gear (90) is fixed to a stator (15) of the turbomachine (1),
and **in that** each planet gear (80) is preferably guided in rotation by two guide bearings (91) which are respectively located in line with said two series of teeth (82d1, 82d2) of the first toothing (82) of this planet gear.

2. The turbomachine (1) according to the preceding claim, wherein said median plane (H) is a median plane of symmetry.

3. The turbomachine (1) according to claim 1 or 2, wherein the sun gear (70) comprises a toothing (70b) formed by two series of teeth (70b1, 70b2) which are at an axial distance from each other and which mesh respectively with the two series of teeth (82d1, 82d2) of the first toothing (82) of each planet gear (80).

4. The turbomachine (1) according to one of the preceding claims, wherein the ring gear (90) comprises a toothing (90d) formed by two series of teeth (90d1, 90d2) which are at an axial distance from each other and which mesh respectively with the two series of teeth (84d1, 84d2) of the second toothing (84) of each planet gear (80).

5. The turbomachine (1) according to one of the preceding claims, wherein the ring gear (90) has a front half-ring gear and a rear half-ring gear, the half-ring gears being symmetrical and being arranged between the two series of teeth (82d1, 82d2) of the first toothing (82) of each planet gear (80).

6. The turbomachine (1) according to one of the preceding claims, wherein each of the planet gears (80) is formed in a single piece.

7. The turbomachine (1) according to one of claims 1 to 5, wherein each of the planet gears (80) is formed by the assembly of at least three parts including :
- a tubular part (95) centred on the second axis (Y), this tubular part (95) comprising a median portion (95a) comprising the two series of teeth (84d1, 84d2) of the second toothing (84d), and
- two annular webs (97) which are centred on the second axis (Y) and extend to the two opposite axial ends of the first part (95), these annular webs (97) respectively comprising at their external peripheries the two series of teeth (82d1, 82d2) of the first toothing (82).

8. The turbomachine (1) according to claim 7, wherein the annular webs (97) each comprise, at their internal peripheries, a non-circular housing (99a) which cooperates in a complementary manner with at least one protuberance (99b) on the corresponding end of the tubular part (95) so that the disc-shaped annular webs (97) are secured in rotation to the tubular part (95).

9. The turbomachine (1) according to one of the preceding claims, wherein each of the planet gears (80) comprises two internal cylindrical surfaces (93a, 93b) which are at an axial distance from each other and respectively form rolling surfaces of rolling bearings (91), or guiding surfaces of hydrodynamic bearings.

10. The turbomachine (1) according to claim 9, wherein said surfaces (93a, 93b) are located respectively in two planes (Q1, Q2) which are perpendicular to the second axis (Y) and which pass through the two series of teeth (84d1, 84d2) of the second toothing (84) of the planet gear (80).

11. The turbomachine (1) according to claim 9 or 10, wherein said surfaces (93a, 93b) are separated from each other by an axial distance which is greater than an axial dimension of each of these surfaces.

12. The turbomachine (1) according to one of claims 9 to 11, wherein said surfaces (93a, 93b) are separated from each other by an axial distance that is at least 80% of an axial dimension of the second toothing (84).

13. The turbomachine (1) according to one of the preceding claims, wherein the sun gear (70) is generally tubular in shape and comprises at one axial end an annular flange (94) for coupling to said first rotor shaft (3).

14. The turbomachine (1) according to one of the preceding claims, wherein the two series of teeth (82d1, 82d2, 84d1, 84d2) of each toothing (82, 84) are herringbone-shaped.

15. The turbomachine (1) according to one of the preceding claims, wherein the planet carrier (100) comprises two discs (100a) and the planet gears (80a) extend axially between the discs (100a) and are attached to these discs (100a).
